# EUROPEAN PATENT APPLICATION

(11) **EP 4 447 261 A1**
(43) Date of publication of application: **16.10.2024**
(21) Application number: 22902490.6
(22) Date of filing: 17.10.2022
(51) Int. Cl.: H02J 7/02

(54) **BATTERY CONTROL SYSTEM AND BATTERY CONTROL METHOD**

(30) Priority: 06.12.2021 JP 2021197880
(71) Applicant: NISSAN MOTOR CO., LTD., Kanagawa 221-0023 (JP); Renault s.a.s, 92100 Boulogne Billancourt (FR)
(72) Inventor: AOKI, Tetsuya, Atsugi-shi, Kanagawa 243-0123 (JP); KOTAKA, Toshikazu, Atsugi-shi, Kanagawa 243-0123 (JP)
(74) Representative: Grünecker Patent- und Rechtsanwälte PartG mbB
(86) International application number: PCT/IB2022/000581
(87) International publication number: WO 2023/105280

(57) **Abstract**

A battery control system (1) includes a discharge mechanism (14) and a controller (10). The discharge mechanism (14) performs balancing of residual discharge capacities among secondary batteries (21) by discharging a battery having a residual discharge capacity greater than a residual discharge capacity of another battery in a battery group (2) that includes a plurality of the batteries whose open circuit voltage at charge is greater than open circuit voltage at discharge. The controller (10) that executes pre-discharge that discharges the battery by at least the amount of power that causes the open circuit voltage to switch from the open circuit voltage at charge to the open circuit voltage at discharge prior to the balancing. The discharge mechanism (14) performs the balancing based on a voltage of the battery after the pre-discharge is executed by the controller (10).

## Description

### Technical Field

The present invention relates to a battery control system and a battery control method configured to perform balancing that uniformize residual discharge capacities of secondary batteries.

The present application claims priority based on Japanese Patent Application No. 2021-197880 filed on December 6, 2021, and, for the designated countries where incorporation by reference of literature is permitted, the content described in the above-described application is incorporated herein by reference and becomes a part of the description herein.

### Background Art

In order to eliminate SOC (State of Charge) variations among battery cells, there has been known a battery control device including a controller that discharges each of the battery cells to a uniform State of Charge SOC_{G} (e.g., see Patent Document 1 (paragraph [0038], [0049] to [0064], the second drawing)). This controller obtains voltage values of the respective battery cells, and calculates SOC from the obtained voltage values. The uniform State of Charge SOC_{G} is the minimum value of the measured SOC of each battery cell. The SOC of each battery cell is adjusted to the uniform State of Charge SOC_{G} by discharging each battery cell to lower the voltage.

### Prior Art Document

### Patent Document

Patent Document 1: Japanese Unexamined Patent Application Publication No. 2010-81732

### Summary of Invention

### Problems to be solved by Invention

However, the above-described battery control device has a problem that, after the SOCs are uniformized, cell voltages may significantly diverge among the battery cells because the battery control device is not configured by considering that the batteries have hystereses, and thus, capacity differences among respective batteries are large.

The problem to be solved by the present invention is to provide a battery control system and a battery control method that allow reducing capacity differences among respective batteries after balancing.

### Means for solving problems

The present invention solves the above-described problem by executing pre-discharge that discharges all the battery by at least the amount of power that causes the open circuit voltage to switch from the open circuit voltage at charge to the open circuit voltage at discharge prior to the balancing and performing the balancing based on a voltage of the battery after the pre-discharge is executed.

### Effects of Invention

The present invention allows reducing capacity differences among respective batteries after the balancing.

### Brief Description of Drawings

FIG. 1 is a block diagram illustrating a battery control system according to an embodiment.
FIG. 2 is a circuit diagram extracting and illustrating a controller, a voltage sensor, and a discharge mechanism in the battery control system according to the embodiment.
FIG. 3 is a graph describing hysteresis of a secondary battery according to the embodiment.
FIG. 4 is a flowchart illustrating a procedure of a battery control method by the battery control system according to the embodiment.
FIG. 5 includes graphs describing changes in cell voltages of the secondary batteries with the battery control method according to the embodiment.

### Mode(s) for Carrying out the Invention

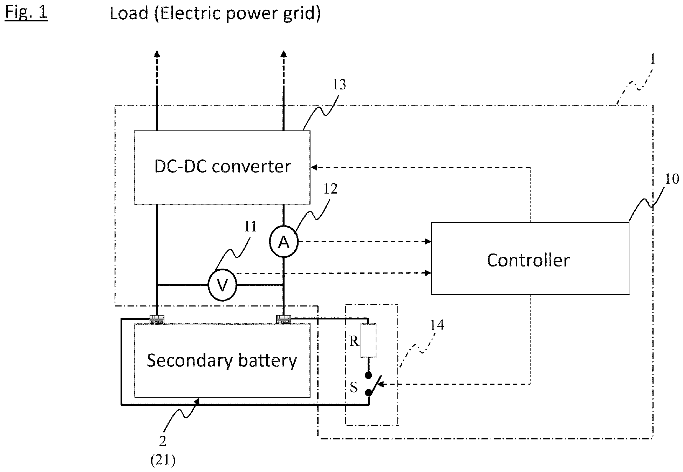

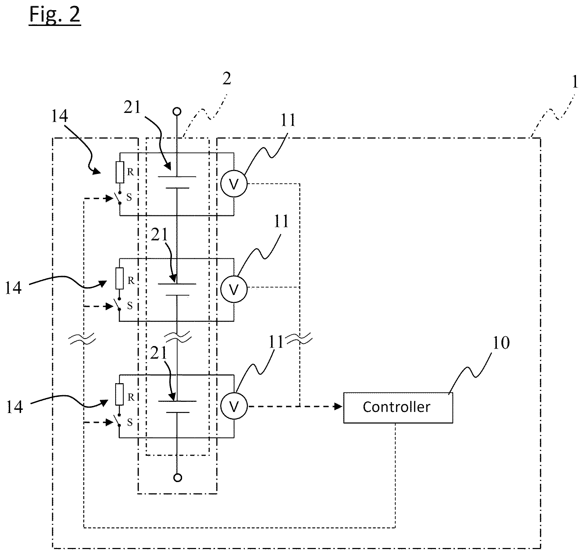

A battery control system 1 according to an embodiment will be described based on the drawings. FIG. 1 is a block diagram illustrating the battery control system according to the embodiment. FIG. 2 is a circuit diagram extracting and illustrating a controller, a voltage sensor, and a discharge mechanism in the battery control system according to the embodiment. Note that, while FIG. 1 illustrates one secondary battery (battery cell) for ease of illustration and understanding, a battery group (battery module) according to the embodiment includes a plurality of the secondary batteries as illustrated in FIG. 2. The battery control system 1 may include, for example, a charging apparatus, which is not illustrated in FIG. 1 or FIG. 2.

As illustrated in FIG. 1, the battery control system 1 includes a controller 10, a voltage sensor 11, a current sensor 12, a DC-DC converter 13, and a discharge mechanism 14. The controller 10 is a battery control unit (BCU). While managing a state of a secondary battery 21 based on a detection voltage detected by the voltage sensor 11 and/or a detection current detected by the current sensor 12, the controller 10 determines a SOC usage range of the secondary battery 21 corresponding to the state of the secondary battery 21. The controller 10 is configured of a memory, such as a ROM or RAM, a processor, such as a CPU, and the like.

The voltage sensor 11 is a sensor for detecting a voltage between terminals of the secondary battery 21. As illustrated in FIG. 1 and FIG. 2, the voltage sensor 11 is connected between wirings connected to a positive electrode and a negative electrode of the secondary battery 21. The current sensor 12 is a sensor for detecting input and output currents of the secondary battery 21. The current sensor 12 is connected to a wiring connected to the positive electrode or the negative electrode of the secondary battery 21. The voltage sensor 11 and the current sensor 12 detect the state of the battery and output the detected values to the controller 10. Note that while it is not specifically illustrated, the battery control system 1 may have a temperature sensor that detects a temperature of the secondary battery 21. The battery control system 1 outputs the temperature of the secondary battery 21 detected by the temperature sensor to the controller 10.

As illustrated in FIG. 1, the DC-DC converter 13 is a power conversion device that converts the voltage input from the secondary battery 21 into a predetermined voltage and outputs a power to a load, such as a motor. The DC-DC converter 13 is also a power conversion device that converts the voltage input from the load such as the motor or a charging apparatus into a predetermined voltage and outputs a power to the secondary battery 21. This DC-DC converter 13 is controlled by the controller 10. The DC-DC converter 13 has an input side to which the secondary battery 21 is connected, and the DC-DC converter 13 has an output side to which the load is connected. The load is, for example, an electric power grid. That is, the secondary battery 21 is connected to the load via the DC-DC converter 13.

The discharge mechanism 14 is a circuit for discharging the secondary battery 21. This discharge mechanism 14 is electrically connected to the positive electrode and the negative electrode of the secondary battery 21, and one of the discharge mechanisms 14 is connected to one of the secondary batteries 21. This discharge mechanism 14 has a resistor body R and a switch S electrically connected in series to this resistor body R. The switch S is controlled to be turned on and off by the controller 10, and the controller 10 turning on the switch S discharges the secondary battery 21 to cause a current to flow to the discharge mechanism 14. In the embodiment, the discharge mechanism 14 is used for balancing and is also used for pre-discharge executed prior to the balancing.

As illustrated in FIG. 1 and FIG. 2, the battery group 2 includes the plurality of secondary batteries 21. The secondary battery 21 is a battery whose open circuit voltage (OCV) at charge greater than open circuit voltage at discharge, and is, for example, a lithium ion secondary battery. Examples of this lithium ion secondary battery may include, for example, while it is not specifically limited, one that uses silicon or an active material containing silicon for a negative-electrode active material or one that uses an active material containing sulfur for a positive-electrode active material. For the secondary battery 21, an electrolyte lithium ion secondary battery may be used or a solid-state lithium ion secondary battery may be used.

A positive electrode of such a secondary battery 21 is not particularly illustrated, but is electrically connected to a negative electrode of another secondary battery 21 via a busbar. That is, the plurality of secondary batteries 21 are connected to the other secondary batteries 21 via the busbar, thus being modularized.

The secondary batteries 21 are electrically connected to a charging apparatus. The charging apparatus connected to the secondary batteries 21 is an apparatus for charging the secondary batteries 21 mounted on, for example, an electric vehicle or a hybrid vehicle. Charging the secondary batteries 21 mounted on a vehicle is executed by, after extracting a charging cable of the charging apparatus and installing a charging gun on an end portion of the charging cable onto a connector of a charging port of the vehicle, operating a charging start switch. The controller 10, while managing the states of charge (SOC) of the secondary batteries 21 included in the battery group 2, controls each of the DC-DC converter 13 and the charging apparatus such that the states of charge of the secondary batteries 2 become the target state of charge.

The secondary battery 2 is electrically connected to the load, such as the motor, as described above. The load is a device that is operated using the power of the secondary batteries 2, and is, for example, a motor that serves as a driving source of a vehicle, and auxiliary equipment, such as an air conditioner and a light. Discharge of the secondary battery 2 is executed under a control of the controller 10 in accordance with a system request or a power request from outside. The system request corresponds to a command from an onboard computer, such as an ECU, while the vehicle is travelling. Regarding the power request from outside, for example, in the case where an air conditioner is operated before the vehicle travels using timer setting in accordance with a command from an external device, such as a mobile terminal, so as to obtain a suitable temperature in the vehicle interior when the vehicle starts to travel, the command from the external device corresponds to the power request from outside.

The secondary battery 2 mounted on an electric vehicle or a hybrid vehicle may be used for Vehicle Grid Integration (VGI). VGI is a technique that grid-connects an electric vehicle or a hybrid vehicle on which the secondary battery 2 is mounted and supplies a power stored in the secondary battery 2 to a grid (load) via the electric power grid.

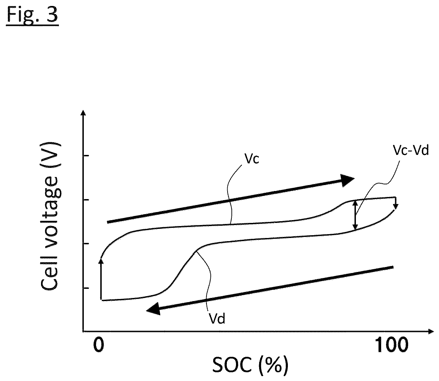

FIG. 3 is a graph describing hysteresis of the secondary battery according to the embodiment. The vertical axis in the graph in FIG. 3 indicates a cell voltage of the secondary battery 21, and the horizontal axis indicates a state of charge (SOC). The curved line V_{c} indicates an open circuit voltage at charge of the secondary battery 21, and the curved line V_{d} indicates an open circuit voltage at discharge of the secondary battery 21.

As illustrated in this FIG. 3, even though the SOC is the same, the secondary battery 21, such as a lithium ion secondary battery, has the open circuit voltage V_{c} at charge greater than the open circuit voltage V_{d} at discharge. If balancing were performed without taking this hysteresis into consideration, there would be a mixture of the secondary batteries after discharge and the secondary batteries after charge caused by the hystereses. When a difference Vc-Vd between Vc and Vd in the same SOC is large (a width of hysteresis is large), cell voltages significantly diverge among the battery cells after the SOC are uniformized by balancing. This makes it difficult to control the cell voltages, such as estimation of SOC, after the balancing or makes it difficult to distinguish between the divergence of the voltages among the secondary batteries caused by the hystereses and a failure of the measuring system or a battery.

In contrast, this embodiment executes pre-discharge that discharges the battery by at least the amount of power that causes the open circuit voltage to switch from the open circuit voltage at charge to the open circuit voltage at discharge prior to the balancing, and performs the balancing based on a voltage of the battery after the pre-discharge is executed. That is, unifying hystereses of all the secondary batteries 21 to the hysteresis at discharge prior to the balancing reduces capacity differences among respective batteries after the balancing.

The following describes a battery control method for the secondary batteries 21 using such a battery control system 1.

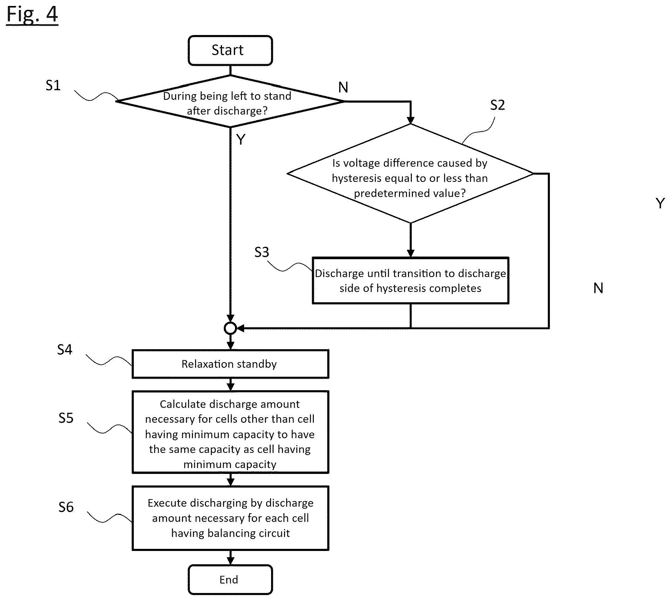

FIG. 4 is a flowchart illustrating a procedure of the battery control method by the battery control system according to the embodiment. At Step S1, the controller 10 determines whether the secondary batteries 21 are in a state of being left to stand after discharge or not (a pre-charge and discharge state determining step). Whether the secondary battery 21 is discharged or not can be determined from a history of detected values of current output from the current sensor 12 to the controller 10 before Step S1 is executed. The controller 10 according to the embodiment corresponds to one example of "pre-charge and discharge state determining means" in the present invention.

Note that the state of being left to stand after discharge means, for example, a state where the secondary battery 21 is left to stand with neither discharging nor charging of the secondary battery 21 being executed after the electric power supply from the secondary battery 21 to the load as described above is stopped. Conversely, the state where the secondary battery 21 is not left to stand after discharge means, for example, a state where the secondary battery 21 is left to stand with neither discharging nor charging being executed after the secondary battery 21 is charged or a state where the secondary battery 21 is immediately after being charged.

When, at Step S1, the controller 10 determines that the secondary battery 21 is not in the state of being left to stand after discharge (for example, when it is determined that the secondary battery 21 is in the state after charge), the controller 10 determines whether the difference (Vc-Vd) between the open circuit voltage of the secondary battery 21 at charge and the open circuit voltage of the secondary battery 21 at discharge in the state of charge (SOC) of the secondary battery 21 is equal to or less than a predetermined value or not at Step S2 (a hysteresis width confirming step). The controller 10 according to the embodiment corresponds to one example of "hysteresis width confirming means" in the present invention.

As illustrated in FIG. 3, the difference (Vc-Vd) may be small depending on a range of the SOC. In such a case, the divergence of the cell voltages between the secondary batteries 21 after the balancing hardly increase, and therefore, it is not necessary to execute the pre-discharge at Step S3 described below. In this case, extra discharge of the secondary battery 21 is preventable, and thus, reduction in residual discharge capacity of the secondary battery 21 is preventable.

The difference (Vc-Vd) is calculated as follows. That is, first, before executing the battery control method of the embodiment, the open circuit voltage V_{c} at charge and the open circuit voltage V_{d} at discharge with respect to the SOC of the secondary battery 21 are preliminarily measured. At Step S2, the controller 10 obtains the open circuit voltage of the secondary battery 21 from the voltage sensor 11, and calculates the SOC from the obtained open circuit voltage. Since the open circuit voltages V_{c}, V_{d} for each SOC of the secondary battery 21 are the values already known from the above-described measurement, the difference (Vc-Vd) corresponding to the SOC of the secondary battery 21 is calculatable.

While it is not specifically limited, for SOC ranges where the difference (Vc-Vd) between the open circuit voltages is equal to or less than the predetermined value, for example, the SOC may be 40% to 60%, and may preferably be 45% to 55%.

When, at Step S2, the controller 10 determines that the difference (Vc-Vd) between the open circuit voltage of the secondary battery 21 at charge and the open circuit voltage of the secondary battery 21 at discharge is greater than the predetermined value, the controller 10 pre-discharges the secondary battery 21 at Step S3 (a pre-discharging step). Here, the pre-discharge means to discharge the secondary battery 21 by at least the amount of power that causes the open circuit voltage to switch from the open circuit voltage at charge to the open circuit voltage at discharge. In the embodiment, the controller 10 discharges the secondary battery 21 by turning on the switch S of the above-described discharge mechanism 14. This pre-discharge allows setting the open circuit voltage of the secondary battery 21 to the open circuit voltage V_{d} at discharge. The discharge mechanism 14 according to the embodiment corresponds to one example of "pre-discharging means" in the present invention. Note that, while in the embodiment, the discharge mechanism 14 is used as the pre-discharging means, it is not limited to this. The battery control system 1 may have pre-discharging means other than the discharge mechanism 14.

The amount of power discharged in the pre-discharge varies by type of the battery or capacity. Accordingly, this amount of power is preferred to be calculated by preliminarily discharging the secondary battery 21 and measuring a change in cell voltage before the battery control method according to the embodiment is executed.

While the pre-discharge may be executed only for the secondary battery 21 determined to be the secondary battery 21 having the open circuit voltage at charge, the pre-discharge is preferably executed for all the secondary batteries 21 in order to surely set the open circuit voltages of all the secondary batteries 21 to the open circuit voltage at discharge. In particular, by executing this pre-discharge for the secondary battery 21 after charge allows effectively preventing the mixture of the secondary battery 21 having the open circuit voltage at charge and the secondary battery 21 having the open circuit voltage at discharge after the balancing.

After the secondary batteries 21 are pre-discharged at Step S3, standby takes place to relax the secondary batteries 21 at Step S4 described above. Performing this relaxation standby allows more accurately obtaining the cell voltages.

When, at Step S1, the controller 10 determines that the state of the secondary battery 21 is left to stand after discharge, a relaxation operation of the secondary battery 21 is performed at Step S4. Specifically, standby takes place in order to relax the secondary battery 21. Here, the relaxation means to leave the secondary battery 21 to stand for a predetermined period in a state where charging and discharging of the secondary battery 21 are stopped. This predetermined period may be, for example, a period it takes for the amount of change in cell voltage of the secondary battery 21 per unit time falls below a predetermined value. While the period it takes for relaxation varies depending on type of the secondary battery and degree of deterioration, it may be, for example, 30 minutes to 12 hours. Note that when the secondary battery 21 is in the state of being left to stand after charge and the period left to stand is a period for the relaxation of the secondary battery 21 to sufficiently proceed, Step S4 may be omitted.

Thus, determining whether the pre-discharge (Step S3) described below is necessary or not allows not executing the pre-discharge when the pre-discharge is not necessary, and therefore, extra discharge of the secondary battery 21 is preventable. In view of this, the reduction of the residual discharge capacity of the secondary battery 21 is preventable.

Next, at Step S5, the controller 10, specifically, calculates a discharge amount necessary for the secondary battery 21 other than the secondary battery 21 having the minimum capacity to have the same amount as the secondary battery 21 having the minimum capacity.

Next, at Step S6, the secondary battery 21 is discharged by a calculated discharge amount (a passive balancing step).

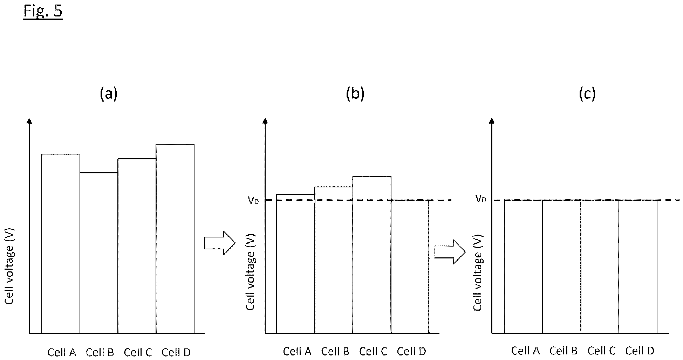

The procedure from the pre-discharge to the passive balancing described above will be described with reference to FIG. 5. FIG. 5 includes graphs describing changes in cell voltages of the secondary batteries in the battery control method according to the embodiment. FIG. 5 exemplarily illustrates the changes in cell voltages of four of a cell A to a cell D. FIG. 5(a) illustrates cell voltages before pre-discharge, FIG. 5(b) illustrates cell voltages after pre-discharge, and FIG. 5(c) illustrates cell voltages after balancing.

First, as illustrated in FIG. 5(a) and FIG. 5(b), the cell A to the cell D have the cell voltages reduced by the pre-discharge. As illustrated in FIG. 5(b), the cell D having the lowest cell voltage among the cell A to the cell D after the pre-discharge is the cell having the minimum capacity. Accordingly, in this example, based on voltage differences between the cell voltages of the cell A to cell C and a cell voltage V_{D} of the cell D, discharge amounts that cause the cell voltages of the cell A to the cell C to have the same value as the cell voltage V_{D} of the cell D are calculated for each of the cell A to the cell C.

As illustrated in FIG. 5(c), discharging the cell A to the cell C by the calculated discharge amounts unifies the cell voltages of the cell A to the cell C to the cell voltage of the cell D. This allows making the residual discharge capacities of the cell A to the cell D approximately uniform.

Note that, while the embodiment exemplarily describes the method that unifies the residual discharge capacities of the other secondary batteries 21 to that of the secondary battery 21 having the minimum capacity as the passive balancing, the method is not limited to this. For example, a method in which the controller 10 calculates an average value of the cell voltages of all the secondary batteries 21 and discharges only the secondary battery 21 having the cell voltage exceeding this average value to unify the cell voltages to the average value may be used. For the balancing method, active balancing may be used. While a circuit for active balancing is not particularly illustrated, a general balancing circuit for active balancing is usable.

The battery control system 1 and the battery control method as described above allow accurately adjusting SOC by causing batteries to be in a discharge state by the pre-discharging means before balancing is performed.

In the case where the relaxation period of the battery voltage lengthens due to, for example, deterioration or the resistance increases, there are cases where the battery having a high cell voltage does not necessarily have a large residual discharge capacity. In contrast, the battery control system 1 and the battery control method according to the embodiment allow more accurate adjustment of the capacity as the lower the battery voltage is, the lower the battery capacity becomes, even when the resistance of the secondary battery 21 increases or the relaxation period of the voltage lengthens due to deterioration, by discharging once by the pre-discharge. That is, among the secondary batteries 21 after the discharge, the deteriorated secondary battery 21 having a large resistance or the secondary battery 21 having a small capacity has a reduced cell voltage, and therefore, the amount to be further discharged at the later capacity adjustment is reduced, thus allowing a more effective capacity adjustment.

While the embodiment of the present invention has been described above, the embodiment is described for making the present invention be easily understood, and is not described for limiting the present invention. Accordingly, the gist of each element disclosed in the above-described embodiment includes all design changes and equivalents falling within the technical scope of the present invention.

### Description of Reference Numerals

- 1: Battery control system
- 10: Controller
- 11: Voltage sensor
- 12: Current sensor
- 13: DC-DC converter
- 14: Discharge mechanism
- R: Resistor body
- S: Switch
- 2: Battery group
- 21: Secondary battery

## Claims

1. A battery control system comprising
a discharge mechanism that performs balancing of residual discharge capacities among batteries by discharging a battery having a residual discharge capacity greater than a residual discharge capacity of another battery in a battery group that includes a plurality of the batteries whose open circuit voltage at charge is greater than open circuit voltage at discharge; and
pre-discharging means that executes pre-discharge that discharges the battery by at least the amount of power that causes the open circuit voltage to switch from the open circuit voltage at charge to the open circuit voltage at discharge prior to the balancing, wherein
the discharge mechanism performs the balancing based on a voltage of the battery after the pre-discharge is executed by the pre-discharging means.

2. The battery control system according to claim 1, comprising
pre-charge and discharge state determining means that determines whether the batteries included in the battery group are in a state of after charge or in a state of after discharge before the pre-discharge is executed, wherein
the pre-discharging means does not execute the pre-discharge when the pre-charge and discharge state determining means has determined that the batteries are in the state of after discharge.

3. The battery control system according to claim 1 or 2, comprising
hysteresis width confirming means that confirms a difference between an open circuit voltage at charge and an open circuit voltage at discharge in a state of charge (SOC) of the batteries before the pre-discharge is executed, wherein
the pre-discharging means does not execute the pre-discharge when the difference between the open circuit voltage at charge and the open circuit voltage at discharge confirmed by the hysteresis width confirming means is equal to or less than a predetermined value.

4. The battery control system according to any one of claims 1 to 3, wherein the discharge mechanism executes a relaxation operation that stops charging and discharging of the batteries for a predetermined period after the pre-discharge is completed, and executes the balancing after the relaxation operation is completed.

5. The battery control system according to any one of claims 1 to 4, wherein the pre-discharging means executes the pre-discharge for all the batteries included in the battery group after the battery group is charged.

6. A battery control method comprising
a balancing step of balancing residual discharge capacities among batteries by discharging a battery having a residual discharge capacity greater than a residual discharge capacity of another battery in a battery group that includes a plurality of the batteries whose open circuit voltage at charge is greater than open circuit voltage at discharge; and
a pre-discharging step of executing pre-discharge that discharges the battery by at least the amount of power that causes the open circuit voltage to switch from the open circuit voltage at charge to the open circuit voltage at discharge prior to the balancing step, wherein
the balancing step performs the balancing based on a voltage of the battery after the pre-discharge is executed by the pre-discharging step.
